# EUROPEAN PATENT APPLICATION

(11) **EP 4 682 472 A1**
(43) Date of publication of application: **21.01.2026**
(21) Application number: 25186262.9
(22) Date of filing: 30.06.2025
(51) Int. Cl.: G01C 21/34, G01C 21/36, G08G 5/34, G08G 5/55, G01C 21/20

(54) **SYSTEM AND METHOD FOR AUTO-FLIGHT VALIDATION**

(30) Priority: 16.07.2024 US 202418773764
(71) Applicant: Honeywell International Inc., Charlotte, NC 28202 (US)
(72) Inventor: LIU, Yang, Charlotte, 28202 (US); FENG, Wenwan, Charlotte, 28202 (US); HICKMAN, Alan, Charlotte, 28202 (US); ZHANG, Xiang, Charlotte, 28202 (US)
(74) Representative: Ingrassia, Fisher & Lorenz UK Ltd.

(57) **Abstract**

A method and system for validating performance of an Auto Flight Control System (AFCS) of an vehicle has been developed. A target for the vehicle is entered into the AFCS by a pilot of the vehicle. A mode of operation for the vehicle is entered into the AFCS by the pilot of the vehicle. The pilot's intention is determined based on the entered target and mode of operation. A maneuver plan of the vehicle is predicted based on the entered target and mode of operation. The predicted maneuver plan is validated based on environmental conditions affecting the target for the vehicle. The predicted maneuver plan is validated based on operational performance characteristics of the vehicle. The pilot is alerted if predicted maneuver plan fails validation. A suggested corrective action is provided to the pilot if predicted maneuver plan fails to be validated.

## Description

### TECHNICAL FIELD

The present invention generally relates to vehicle avionics, and more particularly relates to a system and method for auto-flight validation.

### BACKGROUND

An Auto Flight Control System (AFCS) is a control system which automates vehicle operation to control the vehicle attitude, heading, speed, altitude, path, etc. Various AFCS modes are provided to pilots so that the pilot may use different combinations to accomplish various missions. Pilots select these auto-flight modes and set up the targets thru the AFCS interface which is called as flight mode control panel ("FMCP" or "MCP"). The AFCS will simply execute pilots selected modes and targets, but it does not provide sufficient interaction or prompt the pilots to advise what the modes should do if incorrect modes and provide preventive protections from pilot error. Hence, there is a need for a system and method for auto-flight validation.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for validating performance of an Auto Flight Control System (AFCS) of a vehicle. The method comprises: entering a target for the vehicle into the AFCS, where the target is entered by a pilot of the vehicle; entering a mode of operation for the vehicle into the AFCS, where the mode of operation is entered by the pilot of the vehicle; determining an intention of the pilot of the vehicle based on the entered target, the vehicle status, the mode and the target of operation; predicting a maneuver plan of the vehicle based on the entered target, the vehicle status, the mode and the target of operation; validating the predicted maneuver plan based on environmental conditions affecting the operational safety for the vehicle; validating the predicted maneuver plan based on operational performance characteristics of the vehicle; alerting the pilot if predicted maneuver plan fails to be validated; and providing a suggested corrective action to the pilot if predicted maneuver plan fails to be validated.

A system is provided for validating performance of an Auto Flight Control System (AFCS) of a vehicle. The system comprises: an interactive pilot display for the AFCS, where a pilot uses the interactive display to, enter a target for the vehicle into the AFCS, enter a mode of operation for the vehicle into the AFCS; and a microprocessor for the AFCS that, determines an intention of the pilot of the vehicle based on the vehicle status, the entered target and mode of operation, predicts a maneuver plan of the vehicle based on vehicle status, the entered target and mode of operation, validates the predicted maneuver plan based on environmental conditions affecting the operational safety for the vehicle, validates the predicted maneuver plan based on operational performance characteristics of the vehicle , alerts the pilot if predicted maneuver plan fails to be validated, and provides a suggested corrective action to the pilot if predicted maneuver plan fails to be validated.

Furthermore, other desirable features and characteristics of the disclosed embodiments will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a diagram of a vehicle computer system in accordance with the disclosed embodiments;
FIG.2 is a block diagram of a vehicle computing module and related system suitable for implementation onboard a vehicle in accordance with the disclosed embodiments;
FIG.3 is a block diagram of an Auto Flight Control System (AFCS) suitable for implementation onboard a vehicle in accordance with the disclosed embodiments; and
Figure 4 is a flowchart for a method for auto-flight validation in accordance with the disclosed embodiments; and

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A method and system for validating performance of an Auto Flight Control System (AFCS) of a vehicle has been developed. A target for the vehicle is entered into the AFCS by a pilot of the vehicle. A mode of operation for the vehicle is entered into the AFCS by the pilot of the vehicle. The pilot's intention is determined based on the vehicle status, the entered target and mode of operation. A maneuver plan of the vehicle is predicted based on the vehicle status, the entered target and mode of operation. The predicted maneuver plan is validated based on environmental conditions affecting the operational safety for the vehicle. The predicted maneuver plan is validated based on operational performance characteristics of the vehicle. The pilot is alerted if predicted maneuver plan fails validation. A suggested corrective action is provided to the pilot if predicted maneuver plan fails to be validated.

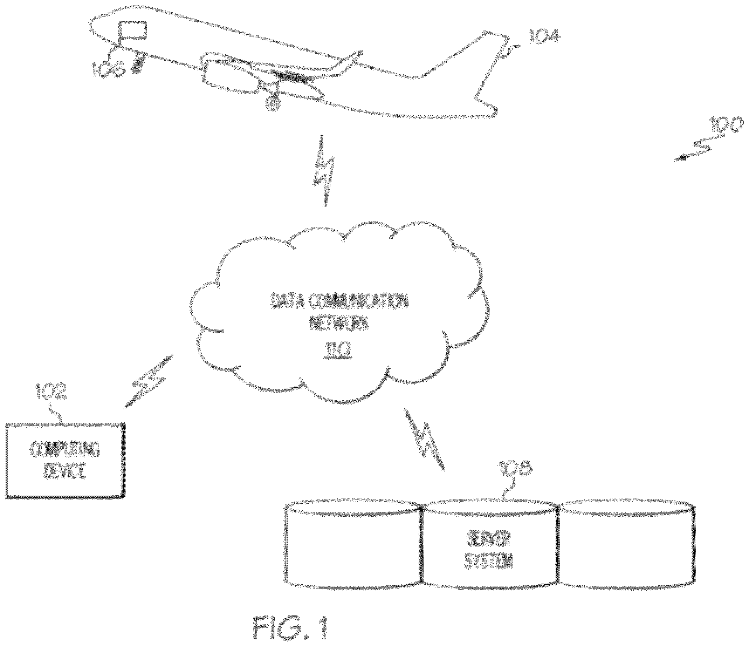

Turning now to the figures, FIG. 1 is a diagram of vehicle computer system 100, in accordance with the disclosed embodiments. In the following embodiments, an aircraft is used as an example of the vehicle that is described. However, it should be understood that a vehicle as described and claim is intended to cover more types of vehicles than just an aircraft. The computing device 102 may be implemented by any computing device that includes at least one processor, some form of memory hardware, a user interface, and communication hardware. For example, the computing device 102 may be implemented using a personal computing device, such as a tablet computer, a laptop computer, a personal digital assistant (PDA), a smartphone, or the like. In this scenario, the computing device 102 is capable of storing, maintaining, and executing Electronic Flight Bag (EFB) applications. In other embodiments, the computing device 102 may be implemented using a computer system onboard the vehicle104.

The vehicle 104 may be implemented as an airplane, helicopter, spacecraft, hovercraft, or the like. The one or more avionics systems 106 may include a Flight Management System (FMS), navigation devices, weather detection devices, radar devices, communication devices, brake systems, and/or any other electronic system or avionics system used to operate the vehicle 104. Data obtained from the one or more avionics systems 106 may include, without limitation: flight data, vehicle heading, vehicle speed, vehicle position, altitude, descent rate, position of air spaces surrounding a current flight plan, activity of air spaces surrounding a current flight plan, or the like.

The server system 108 may include any number of application servers, and each server may be implemented using any suitable computer. In some embodiments, the server system 108 includes one or more dedicated computers. In some embodiments, the server system 108 includes one or more computers carrying out other functionality in addition to server operations. The server system 108 may store and provide any type of data. Such data may include, without limitation: flight plan data, vehicle parameters, avionics data and associated user actions, and other data compatible with the computing device 200.

The computing device 102 is usually located onboard the vehicle 104, and the computing device 102 communicates with the one or more avionics systems 106 via wired and/or wireless communication connection. The computing device 102 and the server system 108 may both be located onboard the vehicle 104. In other embodiments, the computing device 102 and the server system 108 may be disparately located, and the computing device 102 communicates with the server system 108 via the data communication network 110 and/or via communication mechanisms onboard the vehicle 104.

The data communication network 110 may be any digital or other communications network capable of transmitting messages or data between devices, systems, or components. In certain embodiments, the data communication network 110 includes a packet switched network that facilitates packet-based data communication, addressing, and data routing. The packet switched network could be, for example, a wide area network, the Internet, or the like. In various embodiments, the data communication network 110 includes any number of public or private data connections, links or network connections supporting any number of communications protocols. The data communication network 110 may include the Internet, for example, or any other network based upon TCP/IP or other conventional protocols. In various embodiments, the data communication network 110 could also incorporate a wireless and/or wired telephone network, such as a cellular communications network for communicating with mobile phones, personal digital assistants, and/or the like. The data communication network 110 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

Embodiments of the subject matter described herein relate to an existing module integrated, incorporated, or otherwise instantiated for interoperability and use with other existing components of the vehicle system. For purposes of explanation, the subject matter is described herein primarily in the context of vehicle, however, the subject matter is not necessarily limited to use with vehicle and may be implemented in an equivalent manner for other types vehicles (e.g., automotive vehicles, marine vessels, or the like).

In exemplary embodiments, an existing flight management computer (FMC) (or flight management system (FMS)) onboard an vehicle is utilized to communicate data between existing onboard avionics systems or line-replaceable units (LRUs) and another module coupled to the FMC, which supports or otherwise performs new flight management functionality that is not performed by the FMC. For example, a multifunction control and display unit (MCDU) may support or otherwise perform new flight management functionality based on data from onboard avionics or LRUs received via the FMC. In this regard, the FMC is configured to receive operational or status data from one or more avionics systems or LRUs onboard the vehicle at corresponding avionics interfaces and convert one or more characteristics of the operational data to support communicating the operational data with the MCDU. For purposes of explanation, the subject matter may primarily be described herein in the context of converting operational data received from onboard avionics or LRUs in a first format (e.g., an avionics bus format) into another format supported by the interface with the MCDU, the subject matter described herein is not necessarily limited to format conversions or digital reformatting, and may be implemented in an equivalent manner for converting between other data characteristics, such as, for example, different data rates, throughputs or bandwidths, different sampling rates, different resolutions, different data compression ratios, and the like.

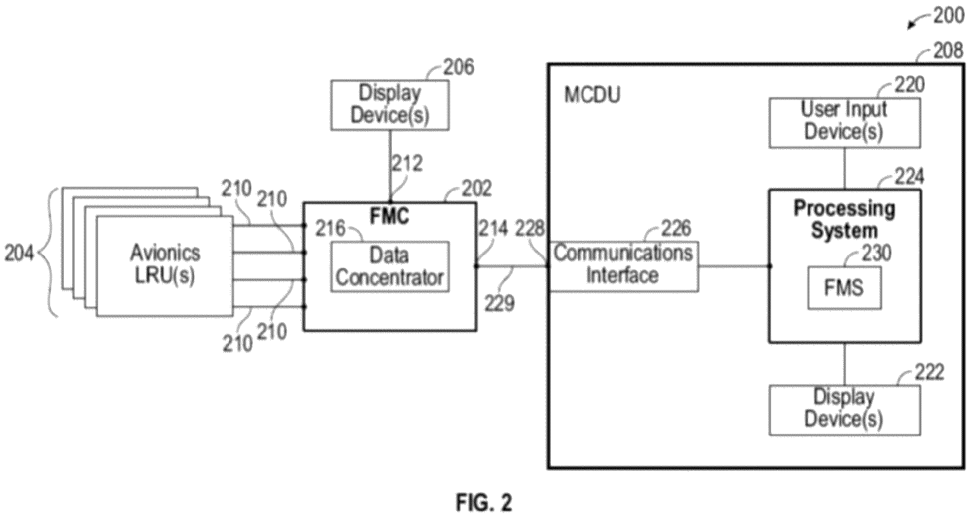

FIG. 2 depicts an exemplary embodiment of a vehicle system 200 suitable for implementation onboard an vehicle 102 shown previously in FIG. 1. The illustrated vehicle system 200 includes a flight management computing module 202 communicatively coupled to a plurality of onboard avionics LRUs 204, one or more display devices 206, and a multifunction computing module 208. It should be appreciated that FIG. 2 depicts a simplified representation of the vehicle system 200 for purposes of explanation, and FIG. 2 is not intended to limit the subject matter in any way.

The flight management computing module 202 generally represents the FMC, the FMS, or other hardware, circuitry, logic, firmware and/or other components installed onboard the vehicle and configured to perform various tasks, functions and/or operations pertaining to flight management, flight planning, flight guidance, flight envelope protection, four-dimensional trajectory generation or required time of arrival (RTA) management, and the like. Accordingly, for purposes of explanation, but without limiting the functionality performed by or supported at the flight management computing module 202, the flight management computing module 202 may alternatively be referred to herein as the FMC. The FMC 202 includes a plurality of interfaces 210 configured to support communications with the avionics LRUs 204 along with one or more display interfaces 212 configured to support coupling one or more display devices 206 to the FMC 202. In the illustrated embodiment, the FMC 202 also includes a communications interface 214 that supports coupling the multifunction computing module 208 to the FMC 202.

The FMC 202 generally includes a processing system designed to perform flight management functions, and potentially other functions pertaining to flight planning, flight guidance, flight envelope protection, and the like. Depending on the embodiment, the processing system could be realized as or otherwise include one or more processors, controllers, application specific integrated circuits, programmable logic devices, discrete gate or transistor logics, discrete hardware components, or any combination thereof. The processing system of the FMC 202 generally includes or otherwise accesses a data storage element (or memory), which may be realized as any sort of non-transitory short or long term storage media capable of storing programming instructions for execution by the processing system of the FMC 202. In exemplary embodiments, the data storage element stores or otherwise maintains code or other computer-executable programming instructions that, when read and executed by the processing system of the FMC 202, cause the FMC 202 to implement, generate, or otherwise support a data concentrator application 216 that performs certain tasks, operations, functions, and processes described herein.

The avionics LRUs 204 generally represent the electronic components or modules installed onboard the vehicle that support navigation, flight planning, and other vehicle control functions in a conventional manner and/or provide real-time data and/or information regarding the operational status of the vehicle to the FMC 202. For example, practical embodiments of the vehicle system 200 will likely include one or more of the following avionics LRUs 204 suitably configured to support operation of the vehicle: a weather system, an air traffic management system, a radar system, a traffic avoidance system, an autopilot system, an autothrottle (or autothrust) system, a flight control system, hydraulics systems, pneumatics systems, environmental systems, electrical systems, engine systems, trim systems, lighting systems, crew alerting systems, electronic checklist systems, and/or another suitable avionics system.

In exemplary embodiments, the avionics interfaces 210 are realized as different ports, terminals, channels, connectors, or the like associated with the FMC 202 that are connected to different avionics LRUs 204 via different wiring, cabling, buses, or the like. In this regard, the interfaces 210 may be configured to support different communications protocols or different data formats corresponding to the respective type of avionics LRU 204 that is connected to a particular interface 210. For example, the FMC 202 may communicate navigation data from a navigation system via a navigation interface 210 coupled to a data bus supporting the ARINC 424 (or A424) standard, the ARINC 629 (or A629) standard, the ARINC 422 (or A422) standard, or the like. As another example, a datalink system or other communications LRU 204 may utilize an ARINC 619 (or A619) compatible avionics bus interface for communicating datalink communications or other communications data with the FMC 202.

The display device(s) 206 generally represent the electronic displays installed onboard the vehicle in the cockpit, and depending on the embodiment, could be realized as one or more monitors, screens, liquid crystal displays (LCDs), a light emitting diode (LED) displays, or any other suitable electronic display(s) capable of graphically displaying data and/or information provided by the FMC 202 via the display interface(s) 212. Similar to the avionics interfaces 210, the display interfaces 212 are realized as different ports, terminals, channels, connectors, or the like associated with the FMC 202 that are connected to different cockpit displays 206 via corresponding wiring, cabling, buses, or the like. In one or more embodiments, the display interfaces 212 are configured to support communications in accordance with the ARINC 661 (or A661) standard. In one embodiment, the FMC 202 communicates with a lateral map display device 206 using the ARINC 702 (or A702) standard.

In exemplary embodiments, the multifunction computing module 208 is realized as a multifunction control and display unit (MCDU) that includes one or more user interfaces, such as one or more input devices 220 and/or one or more display devices 222 (shown previously as 106 in FIG. 1), a processing system 224, and a communications module 226. The MCDU 208 generally includes at least one user input device 220 that is coupled to the processing system 224 and capable of receiving inputs from a user, such as, for example, a keyboard, a key pad, a mouse, a joystick, a directional pad, a touchscreen, a touch panel, a motion sensor, or any other suitable user input device or combinations thereof. The display device(s) 222 may be realized as any sort of monitor, screen, LCD, LED display, or other suitable electronic display capable of graphically displaying data and/or information under control of the processing system 224.

The processing system 224 generally represents the hardware, circuitry, logic, firmware and/or other components of the MCDU 208 configured to perform the various tasks, operations, functions and/or operations described herein. Depending on the embodiment, the processing system 224 may be implemented or realized with a general purpose processor, a microprocessor, a controller, a microcontroller, a state machine, an application specific integrated circuit, a field programmable gate array, any suitable programmable logic device, discrete gate or transistor logic, discrete hardware components, or any combination thereof, designed to perform the functions described herein. Furthermore, the steps of a method or algorithm described in connection with the embodiments disclosed herein may be embodied directly in hardware, in firmware, in a software module executed by the processing system 224, or in any practical combination thereof. In this regard, the processing system 224 includes or accesses a data storage element (or memory), which may be realized using any sort of non-transitory short or long term storage media, and which is capable of storing code or other programming instructions for execution by the processing system 224. In exemplary embodiments described herein, the code or other computer-executable programming instructions, when read and executed by the processing system 224, cause the processing system 224 to implement with an FMS 230 (shown previously as 104 in FIG.1) additional tasks, operations, functions, and processes described herein.

The communications module 226 generally represents the hardware, module, circuitry, software, firmware and/or combination thereof that is coupled between the processing system 224 and a communications interface 228 of the MCDU 208 and configured to support communications between the MCDU 208 and the FMC 202 via an electrical connection 229 between the MCDU communications interface 228 and the FMC communications interface 214. For example, in one embodiment, the communications module 226 is realized as an Ethernet card or adapter configured to support communications between the FMC 202 and the MCDU 208 via an Ethernet cable 229 provided between Ethernet ports 214, 228. In other embodiments, the communications module 226 is configured to support communications between the FMC 202 and the MCDU 208 in accordance with the ARINC 429 (A429) standard via an A429 data bus 229 provided between A429 ports 214, 228 of the respective modules 202, 208. In yet other embodiments, the communications module 226 is configured to support communications between the FMC 202 and the MCDU 208 in accordance with the ARINC 422 (A422) standard via an A422 data bus 229 provided between A422 ports 214, 228 of the respective modules 202, 208. In yet other embodiments, the communications module 226 is configured to support communications between the FMC 202 and the MCDU 208 in accordance with the ARINC 739 (A739) standard via an A739 data bus 229 provided between A739 ports 214, 228 of the respective modules 202, 208.

In various embodiments, the FMC 202 and MCDU 208 communicate using a different communications protocol or standard than one or more of the avionics LRUs 204 and/or the display devices 206. In such embodiments, to support communications of data between the MCDU 208 and those LRUs 204 and/or display devices 206, the data concentrator application 216 at the FMC 202 converts data from one format to another before retransmitting or relaying that data to its destination. For example, the data concentrator application 216 may convert data received from an avionics LRU 204 to the A429 or Ethernet format before providing the data to the MCDU 208, and vice versa. Additionally, in exemplary embodiments, the FMC 202 validates the data received from an avionics LRU 204 before transmitting the data to the MCDU 208. For example, the FMC 202 may perform debouncing, filtering, and range checking, and/or the like prior to converting and retransmitting data from an avionics LRU 204.

It should be noted that although the subject matter may be described herein in the context of the multifunction computing module 208 being realized as an MCDU, in alternative embodiments, the multifunction computing module 208 could be realized as an electronic flight bag (EFB) or other mobile or portable electronic device. In such embodiments, an EFB capable of supporting an FMS 230 application may be connected to an onboard FMC 202 using an Ethernet cable 229 to support flight management functionality from the EFB in an equivalent manner as described herein in the context of the MCDU.

In one or more embodiments, the MCDU 208 stores or otherwise maintains programming instructions, code, or other data for programming the FMC 202 and transmits or otherwise provides the programming instructions to the FMC 202 to update or otherwise modify the FMC 202 to implement the data concentrator application 216. For example, in some embodiments, upon establishment of the connection 229 between modules 202, 208, the MCDU 208 may automatically interact with the FMC 202 and transmit or otherwise provide the programming instructions to the FMC 202, which, in turn, executes the instructions to implement the data concentrator application 216. In some embodiments, the data concentrator application 216 may be implemented in lieu of flight management functionality by the MCDU 208 reprogramming the FMC 202. In other embodiments, the FMC 202 may support the data concentrator application 216 in parallel with flight management functions. In this regard, the FMC 202 may perform flight management functions, while the FMS 230 application on the MCDU 208 supplements the flight management functions to provide upgraded flight management functionality within the vehicle system 200.

An AFCS will simply execute pilots selected modes and targets. It is highly reliant on a pilots' experience and skills to understand and use the correct modes and targets to accomplish the missions. However, embodiments of the present disclosure provide sufficient interaction and prompt to the pilots with: what the AFCS is doing and will do; the correct modes and targets are in use to accomplish the mission; and the executed maneuver will has no safety or performance issues.

These embodiments introduce a concept to add simple maneuver prediction, validation and prompt function inside or outside an existing AFCS. This will greatly improve the interaction between pilots and the AFCS and provide preventive protections for potential pilot errors. Further, it will bring benefits for simplifying vehicle operations and will be more adaptive for future integrated solutions for unmanned aerial vehicles/urban aerial mobility (UAV/UAM) vehicles. The concept provides an automatic flight control solution with maneuver prediction, validation and prompt, which have the following functions: pilot intention interpretation and determination which determines the pilot's intention based on the data like vehicle status, the pilots selected modes and targets; maneuver plan prediction, validation and prompt which predicts the vehicles trajectory and validates if the maneuver plan has potential conflict with environment threat like traffic, terrain and weather and predict if the maneuver plan will cause operational performance to degrade like an overshoot to target path, a potential under-run or overrun of the target landing zone; and detecting a potential conflict or performance degradation and providing an alert along with correction actions.

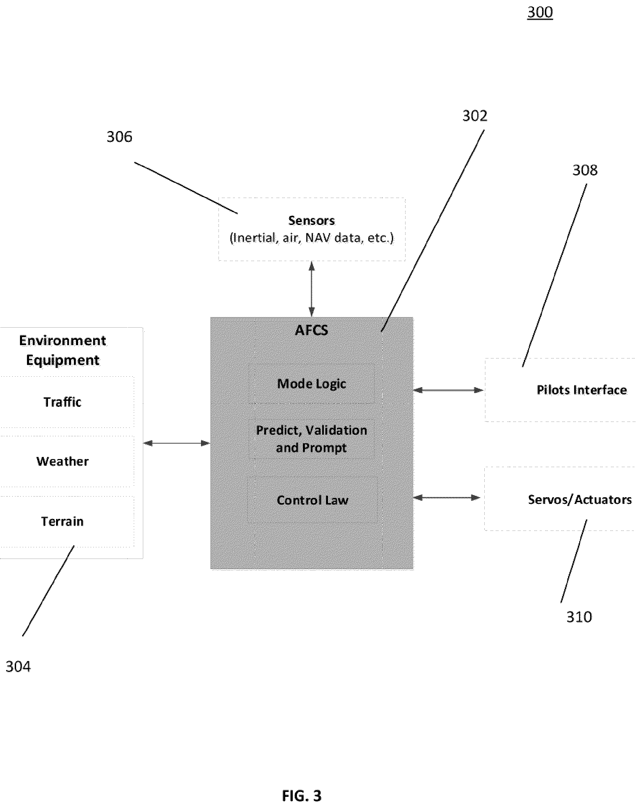

Turning now to FIG.3, a block diagram 300 is shown of an Auto Flight Control System (AFCS) 302 suitable for implementation onboard a vehicle in accordance with the disclosed embodiments. The AFCS 302 normally manages the flight modes and controls the vehicle maneuvers, hence it could be the system that hosts the vehicle maneuver validation and prediction function in some embodiments. In alternatives, the mauver validation and prediction could also be hosted outside the AFCS 302. Instead, the functions could be hosted in another equipment (either onboard or offboard) with more computing resources, while the onboard AFCS 302 could provide the activated modes/targets and accept any prompts/corrections.

In the AFCS 302 itself, the sensors 306 collect and display operational data for the vehicle. The pilots interface 308 may be existing displays like a primary flight display (PFD), multi-function display (MFD) or it may be a more interactive AFCS display, like a touch screen flight mode control panel (FMCP), which may display the vehicles intended maneuver, alerting and promoted corrections. The environment equipment 304 may provide the AFCS 302 with the environment status in vicinity of the vehicle, like the traffic, weather and obstacle status, so AFCS may validate its maneuver plan against with these environment factors to identify potential risks. The servos/actuators 310 will initiate and activate the validated maneuver plan.

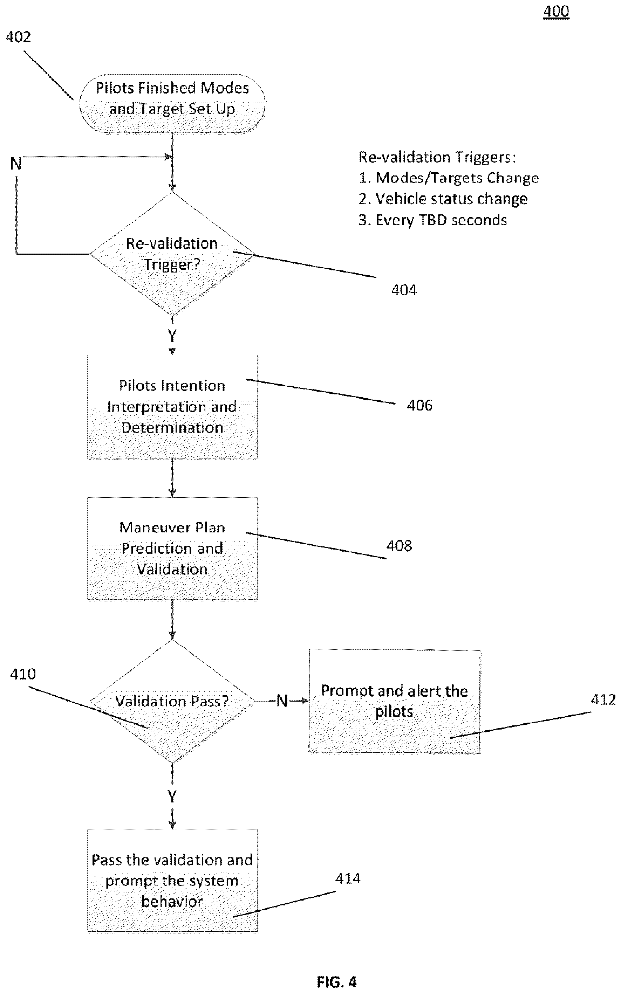

Turning now to FIG. 4, a flowchart 400 is shown for a method for auto-flight validation in accordance with the disclosed embodiments. The system will start the maneuver validation process when the system detects pilots have finished setting up the modes and targets 402. The validation process may be re-initiated thru different triggers 404, for example: if modes/targets are adjusted; the vehicle status changes (e.g., vehicle starts recovering from an improper energy status); or the re-evaluation is initiated periodically. The system will further interpret pilot intention by the armed/active modes and targets along with the vehicle status data 406. The system will then predict/propagate the vehicle's maneuver plan based on current vehicle status data like altitude, position, heading, velocity and the selected modes/targets 408. For example, when a flight level change (FLCH) mode is activated with a selected altitude target, the vehicle's vertical profile could be predicted/propagated into climb or descent segments with fixed thrust (e.g., maximum or idle) followed by a constant G load capture curve to the selected altitude target, the prediction could be terminated at the target altitude.

After the vehicle's maneuver plan is determined, the system will start the maneuver plan validation 410 against different rules based on the validated tactical goals that the system try to accomplish. Examples of validation include: validating the maneuver plan against the environment threat like traffic, terrain and weather; and validating the maneuver plan against operational rules, a performance degrade like an overshoot to the target path, a potential under-run or overrun of the target landing zone. If the maneuver plan validation failed, like potential conflicts or performance degrade has been identified, the system will provide alerts and proposed correction actions to the pilot 412, or the system could automate the correction in alternative embodiments. If the maneuver plan validation is passed, the system could prompt the system behavior like what the system is doing and will do thru the human interfaces like displays 414.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for validating performance of an Auto Flight Control System (AFCS) of a vehicle, comprising:
entering a target for the vehicle into the AFCS, where the target is entered by a pilot of the vehicle;
entering a mode of operation for the vehicle into the AFCS, where the mode of operation is entered by the pilot of the vehicle;
determining an intention of the pilot of the vehicle based on the entered target and mode of operation;
predicting a maneuver plan of the vehicle based on the entered target and mode of operation;
validating the predicted maneuver plan based on environmental conditions affecting the target for the vehicle;
validating the predicted maneuver plan based on operational performance characteristics of the vehicle;
alerting the pilot if predicted maneuver plan fails to be validated; and
providing a suggested corrective action to the pilot if predicted maneuver plan fails to be validated.

2. The method of Claim 1, where the environmental conditions affecting the target for the vehicle comprise air traffic.

3. The method of Claim 1, where the environmental conditions affecting the target for the vehicle comprise weather conditions.

4. The method of Claim 1, where the environmental conditions affecting the target for the vehicle comprise terrain.

5. The method of Claim 1, where the operational performance characteristics of the vehicle comprise overshooting of the target.

6. The method of Claim 1, where the operational performance characteristics of the vehicle comprise undershooting of a landing.

7. The method of Claim 1, where the operational performance characteristics of the vehicle comprise overshooting of a landing.

8. The method of Claim 1, where the suggested corrective action is automatically implemented by the AFCS.
